# EUROPEAN PATENT APPLICATION

(11) **EP 4 414 108 A1**
(43) Date of publication of application: **14.08.2024**
(21) Application number: 23175172.8
(22) Date of filing: 24.05.2023
(51) Int. Cl.: B23B 29/32

(54) **LATHE HEAD WITH A MULTI-TOOL ROTATING TURRET**

(30) Priority: 10.02.2023 ES 202330218 U
(71) Applicant: Zayer, S.A., 01013 Vitoria-Gasteiz (Alava) (ES)
(72) Inventor: Calleja Martinez, Luis, 01013 Vitoria (ES)
(74) Representative: Izquierdo Blanco, Maria Alicia

(57) **Abstract**

Lathe head assembly (1) with multi-tool rotating turret (3) comprising an angle head body (2) with a coupling (2a) to the lathe, an engine transmission (4) input and a multi-tool rotating turret (3) consisting of an insertion area (3a) that is in contact with the engine transmission (4) by means of a transmission bevel gear (5) through the transmission cylinder (3a3). The multi-tool rotating turret (3) consisting of at least two tool holders (3b1). The locking of the rotating multi-tool turret (3) is carried out by the engagement of the locking crown gear (3a2) of the insertion area (3a) with the locking crown (2b) of the angle head body (2) and the unlocking of the rotating multi-tool turret (3) is carried out by means of the action of the unlocking elements (3a1) located in the insertion area (3a) against the body of the angled head (2).

## Description

### Field of the invention

This invention concerns lathe head with a multi-tool rotating turret, of the kind used in CNC-type computer-controlled machines that require several tool changes to carry out the operations of shaping and finishing of the pieces.

In this type of machine tool, a certain working angle of each tool is required to operate on the piece to be lathed and for which necessary locking modes are provided to set the locking angle of each tool.

### Prior state of the art

At present and as a reference to the state of the art, lathe heads for one tool are known, which, after carrying out the necessary operations, must be removed to carry out a tool change. This operation must be carried out several times to carry out the lathing, since the operations of shaping, finishing, facing, etc. use different tools, which increases the lathing time of each part.

These known lathe heads can be fixed, so that the position of the tool is controlled solely by the lathe machine, or they provide mobility in more axes, so that the tool can be positioned at more varied angles but only have one tool holder and the operating positions of the tools are predetermined by the geometry of the head.

To determine the geometry, the heads are locked in a certain operating position, by means of hydraulic, pneumatic, or electrical controls. The elements to achieve this blocking and the enormous forces required to do so are major drawbacks in implementing these controls. In addition, in these cases, the way to manage the control data of the angular positioning in braking is not precise, which means it is very difficult to repeat the positioning and there is, therefore, a loss of precision when performing repetitive operations, such as the manufacture of many units of the same type.

Another means of achieving the movement of the head to a specific position is based on its mechanical interlocking, using for this purpose crown wheels, where this positioning is achieved by mutual displacement of crown wheels with respect to each other. These interlocks also have their own limitations that are determined by the number of teeth in each crown. In these systems, there is still the problem of having a system that offers little flexibility in setting the angular displacement in question.

### Explanation of the invention and advantages

Faced with this state of art, the present invention refers to a lathe head assembly (1) with a multi-tool rotating turret (3) that comprises an angled head body (2) with a coupling (2a) to the lathe machine and an engine transmission (4) input, and a multi-tool rotating turret (3) consisting of an insertion area (3a) that is in contact with the engine transmission (4) by means of a transmission bevel gear (5) through the transmission cylinder (3a3), in which the locking of the multi-tool rotating turret (3) is carried out by the engagement of the locking crown gear (3a2) of the insertion area (3a) with the locking crown (2b) of the angled head body (2) and the unlocking of the multi-tool rotating turret (3) is carried out by means of the action of the unlocking elements (3a1) located in the insertion area (3a) against the angled head body (2).

Thanks to this configuration, the rotation of the multi-tool rotating turret (3) is independent of the locking-unlocking system, thus allowing the tool to be placed in the required location and then to lock the turret in that position. This allows the same arrangement to be repeated multiple times without depending on the deviations that may occur when depending, the positioning, on the advancement of gears, being able to block the tool once it has reached the location regardless of how many teeth the gear must advance to reach it.

In addition, the tool holder area (3b) has spur gears (3b2) that in the locked position disengage from the transmission cylinder (3a3) that transmits the torque to the multi-tool rotating turret (3) and in the unlocked position, they mesh with the transmission cylinder (3a3) that transmits the torque to the multi-tool rotating turret (3). This guarantees that the tool will not alter its position in the locked position due to unwanted movement of the transmission.

Given that in the unlocked position, the hydraulic pressure inlet chamber (6) closes and in the locked position the hydraulic pressure inlet chamber (6) opens, in the locked position, the pressure exerted on the chamber guarantees correct engagement, and therefore operation, of the locking crown gear (3a2). In the unlocked position, there is no hydraulic pressure on the rotating turret, adding safety to any operation that personnel must carry out on it, since the hydraulic pressure can be maintained in the hydraulic elements even with the lathe machine de-energized.

### Drawings and references

To better understand the nature of the invention, the attached drawings show an industrial embodiment that is merely illustrative and non-limiting.

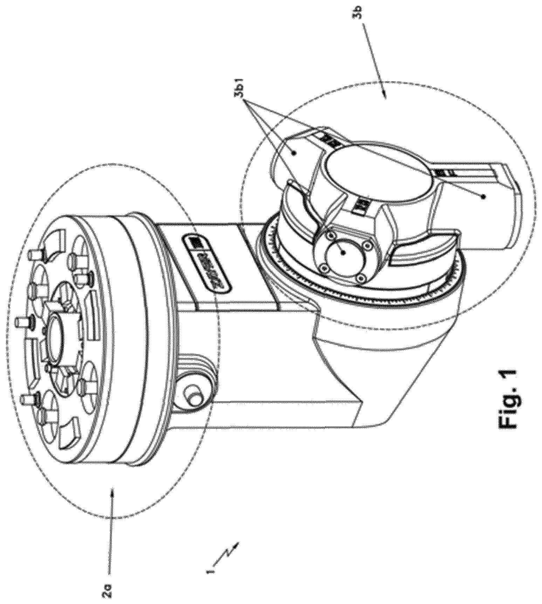

Figure 1 shows a perspective view of the lathe head assembly with a multi-tool rotating turret.

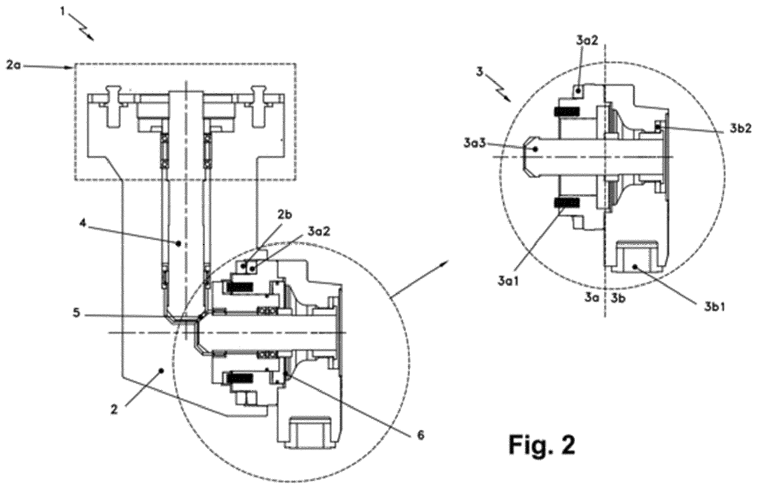

Figure 2 shows a cross-sectional view of the lathe head assembly with a multi-tool rotating turret, with the multi-tool rotating turret locked.

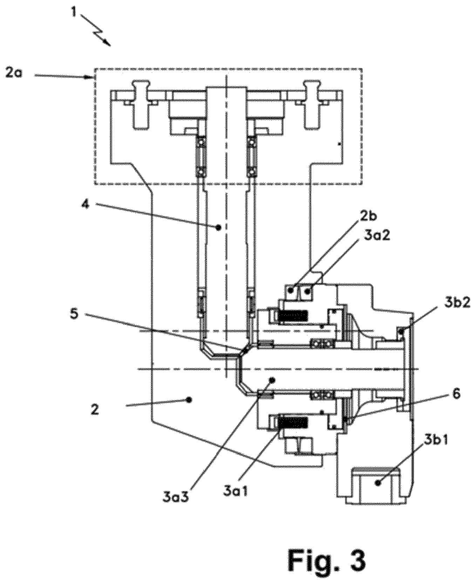

Figure 3 shows a cross-sectional view of the lathe head assembly with a multi-tool rotating turret, with the multi-tool rotating turret unlocked.

The following references are indicated in these figures:
1. Head assembly.
2. Angled head body.
   2a. Coupling.
   2b. Locking crown
3. Multi-tool rotating turret.
   3a. Insertion area
      3a1. Unlocking element
      3a2. Locking crown gear
      3a3. Transmission cylinder
   3b. Tool holder area
      3b1. Tool holder
      3b2. Spur gear
4. Engine transmission.
5. Transmission bevel gear
6. Hydraulic pressure inlet chamber

### Disclosure of a preferred embodiment

In relation to the drawings and references listed above, the attached drawings illustrate a preferred embodiment of the object of the invention, referring to a lathe head assembly (1) with a multi-tool rotating turret (3) comprising an angled head body (2) with a coupling (2a) to the lathe machine where the coupling of hydraulic fluid, electricity and signals takes place, as well as the actual fastening of the head assembly (1) with the lathe machine and an engine transmission (4) input that receives the transmission input to the head assembly (1) from the lathe machine engine. The head assembly (1) has a multi-tool rotating turret (3) that consists of an insertion area (3a), which is inserted inside the angled head body (2), which is in contact with the engine transmission (4) by means of a transmission bevel gear (5) through the transmission cylinder (3a3), and a tool holder area (3b). The tool holder area (3b) has one or more tool holders (3b1) positioned radially. The rotating tool-holder turret (3) is capable of rotation around the axis of the transmission cylinder (3a3) thanks to the action of the transmission cylinder (3a3) on the spur gears (3b2). Thereby, the tool contained in the tool holder is positioned (3b1) in the proper working position. Once the tool is positioned, the multi-tool rotating turret (3) is locked by the engagement of the locking crown gear (3a2) of the insertion area (3a) with the locking crown (2b) of the angled head body (2). This locking crown gear (3a2) is held in its engaged position by the hydraulic pressure exerted in the hydraulic pressure inlet chamber (6). To be able to turn the multi-tool rotating turret (3) again, the unlocking is carried out by means of the action of the unlocking elements (3a1) located in the insertion area (3a) against the angled head body (2). Through the force exerted by the unlocking element, the multi-tool rotating turret (3) moves in the direction of the axis of the transmission cylinder (3a3) opposite to the angled head body (2), closing the inlet chamber of hydraulic pressure (6) and thus achieving a separation between the angled head body (2) and the multi-tool rotating turret (3) defined by the geometry of the hydraulic pressure inlet chamber (6). In a preferred embodiment, it is foreseen that the unlocking elements (3a1) are springs, although they could also be pistons, another type of spring or hydraulic pressure diversion, among others. When carrying out an independent blocking, the same position can be repeated multiple times with great precision because it does not depend on the deviations that may occur in the positioning due to the advancement of gears, being able to block the tool once it has reached the appropriate position regardless of how many teeth it must advance the gear to reach the position.

The spur gears (3b2) of the tool holder area, in the locked position, disengage from the transmission cylinder (3a3) that transmits the torque from the engine transmission (4) received through the transmission bevel gears (5) to the multi-tool rotating turret (3) and in the unlocked position, the gap between the angled head body (2) and the multi-tool rotating turret (3) defined by the geometry of the hydraulic pressure inlet chamber (6) is enough for the spur gears (3b2) to mesh with the transmission cylinder (3a3), thus allowing the rotation of the multi-tool rotating turret (3). In addition, a locked position separated from the torque transmission is achieved, so that, once the multi-tool rotating turret (3) is locked, it is impossible for it to deviate due to accidental or unwanted torque transmissions, guaranteeing the correct angulation and good operation of the head.

When the hydraulic pressure inlet chamber (6) stops exerting pressure against the angled head body (2), thanks to the action of the release elements, the multi-tool rotating turret (3) separates from the angled head body (2) until the hydraulic pressure inlet chamber (6) closes, placing it in the unlocked position. To move to the locked position, the hydraulic pressure inlet chamber (6) opens, the pressure exerted against the walls of the hydraulic pressure chamber (6) and thanks to the geometry of the chamber itself moves the multi-tool rotating turret (3) against the angled head body (2). Thus, with the multi-tool rotating turret (3) in the locked position, it is guaranteed that the insertion area (3a) remains in the proper position, maintaining the engagement of the locking crown gear (3a2) of the insertion area (3a) with the locking crown (2b) of the angled head body (2). With the multi-tool rotating turret (3) in the unlocked position, it is guaranteed that, as the pressure inlet chamber (6) is closed, the safety of any maintenance operation that must be carried out is increased.

## Claims

1. Lathe head assembly (1) with multi-tool rotating turret (3) comprising an angled head body (2) with a coupling (2a) to the lathe machine and an engine transmission (4) input and a multi-tool rotating turret (3) consisting of an insertion area (3a) that is in contact with the engine transmission (4) by means of a transmission bevel gear (5) through the transmission cylinder (3a3), **characterised in that** it consists of a multi-tool rotating turret (3) with at least two tool holders (3b1) and the locking of the multi-tool rotating turret (3) is performed by the locking crown gear (3a2) of the insertion area (3a) with a locking crown (2b) of the angled head body (2) and the unlocking of the multi-tool rotating turret (3) is carried out by means of the action of the unlocking elements (3a1) located in the insertion area (3a) against the angled head body (2).

2. Lathe head assembly (1) with a multi-tool rotating turret (3) comprising an angled head body (2) with a coupling (2a) to the lathe machine and an engine transmission (4) input and a multi-tool rotating turret (3) consisting of an insertion area (3a) that is in contact with the engine transmission (4) by means of a transmission bevel gear (5) through the transmission cylinder (3a3) according to claim 1, **characterised in that** the tool holder area (3b) has spur gear (3b2) that in the locked position, disengage from the transmission cylinder (3a3) that transmits the torque to the multi-tool rotating turret (3) and in the unlocked position engage with the transmission cylinder (3a3) transmitting the torque to the multi-tool rotating turret (3).

3. Lathe head assembly (1) with multi-tool rotating turret (3) comprising an angled head body (2) with a coupling (2a) to the lathe machine and an engine transmission (4) input and a multi-tool rotating turret (3) consisting of an insertion area (3a) that is in contact with the engine transmission (4) by means of a transmission bevel gear (5) through the transmission cylinder (3a3) according to the previous claims, **characterised in that** in the unlocked position the hydraulic pressure inlet chamber (6) closes and in the locked position, the hydraulic pressure inlet chamber (6) opens.
